# EUROPEAN PATENT APPLICATION

(11) **EP 0 540 847 A1**
(43) Date of publication of application: **12.05.1993**
(21) Application number: 92114951.4
(22) Date of filing: 02.09.1992
(51) Int. Cl.: G11B 11/10

(54) **Improvement in magneto-optical recording medium**

(30) Priority: 11.09.1991 JP 259695/91
(71) Applicant: Shin-Etsu Chemical Co., Ltd., Chiyoda-ku Tokyo 100 (JP)
(72) Inventor: Nomura, Tadao, Kawasaki-shi, Kanagawa-Ken (JP); Tawara, Yoshio, Setagaya-ku, Tokyo (JP); Tokunaga, Katsushi, Kawasaki-shi, Kanagawa-ken (JP); Nakayama, Kazuhiko, Yokohama-shi, Kanagawa-ken (JP)
(74) Representative: Raeck, Wilfrid, Dipl.-Ing.

(57) **Abstract**

In a magneto-optical recording medium consisting of a transparent substrate, first dielectric layer, magnetic recording layer, second dielectric layer and reflecting layer by which the signal-reading characteristics and the bit stability can be greatly improved. The magnetic recording layer is formed in a two-layered stratified structure each layer having a specified thickness and being formed from a rare earth element and a 3d transition metal element such as iron and cobalt, in which one of the two layers is formed from an alloy which is richer in the content of the rare earth element than the compensation composition and the other of the two layers is formed from an alloy which is leaner in the content of the rare earth element than the compensation composition.

## Description

### BACKGROUND OF THE INVENTION

The present invention relates to an improvement in a magneto-optical recording medium or, more particularly, to an improvement in a magneto-optical recording medium to impart good signal-reading characteristics and excellent bit stability thereto.

Along with the rapid progress of the information-predominant society in recent years, magneto-optical recording media in the form of a disc are highlighted due to the advantageous characteristics in respect of the large capacity for information recording, replaceability of one medium with another and rewritability so that extensive investigations are now under way in order to further improve the data-transfer velocity and the C/N ratio. The requirements for the discs of a magneto-optical recording medium in this regard include a large Kerr rotation angle, stability of the bits, excellent recording sensitivity and so on.

A magneto-optical recording medium generally has a laminar structure consisting of a transparent substrate plate made from a plastic resin and layers successively formed thereon including a first dielectric layer, a magnetic recording layer, a second dielectric layer and a metallic reflecting layer. The magnetic recording layer is usually formed from an amorphous alloy consisting of a rare earth element and a 3d transition metal element such as iron, cobalt and nickel. Although various kinds of the rare earth elements can be used for the purpose, gadolinium, terbium and the like are most widely used for the purpose. While the alloys of gadolinium and iron, gadolinum, iron and cobalt and the like can give a large Kerr rotation angle as compared with the alloys using other kinds of the rare earth elements, these gadolinium-based alloys are disadvantageous in respect of the relatively small coercive force of only 1 kOe or smaller resulting in poor stability of the bits.

A proposal has been made in this regard in Japanese Patent Kokai 57-78652 to form the magnetic recording layer of a magneto-optical recording medium to have a two-layered stratified structure consisting of, one, the above mentioned gadolinium-based alloy and, the other, a terbium-based alloy such as the alloys consisting of terbium and iron, terbium, iron and cobalt and the like having a larger coercive force than the former so as to rely on the layer of the gadolinium-based alloy for the signal-reading characteristics and on the layer of the terbium-based alloy for the recording characteristics and the bit stability. A disadvantage in such a two-layered recording layer is that, since the recording layer unavoidably has a relatively large thickness of 100 to 200 nm in order that different functions are shared between the two layers jointly forming the stratified structure, a laser of a relatively large output power is required for the temperature increase of the recording layer resulting in a relative decrease in the recording sensitivity. Ichitani, et al. have proposed in Outlines of the Scientific Lectures in the 14th Japan Applied Magnetics Society (1990) to decrease the overall thickness of such a two-layered recording layer. The proposed decrease in the overall thickness of the two-layered recording layer has another problem that, different from the recording layer having the above mentioned relatively large overall thickness, reversal of the magnetic domains takes place simultaneously in the two layers so that these two layers can no longer be separately relied on for each of the recording characteristics and the signal-reading characteristics. In addition, the coercive force of the recording layer can rarely exceed 2 to 3 kOe so that no full stabilization of the bits can be obtained to meet the practical requirement. This is presumably because the chemical composition of each of the alloys forming the two layers is rich in the content of the 3d transition metal element as compared with the compensation composition.

### SUMMARY OF THE INVENTION

The present invention accordingly has an object to provide an improved magneto-optical recording medium having a two-layered magnetic recording layer free from the above described problems and disadvantages in the conventional magneto-optical recording medium of the above mentioned type.

Thus, the present invention provides an improvement, in a magneto-optical recording medium having a laminar structure consisting of a transparent substrate plate and a plurality of layers successively formed on the substrate plate including a first dielectric layer, a magnetic recording layer having a two-layered structure, a second dielectric layer and a metallic reflecting layer, which comprises forming the magnetic recording layer consisting of two layers of different alloys each composed of at least one kind of rare earth elements and at least one kind of 3d transition metal elements, of which one of the alloys has a chemical composition having a content of the 3d transition element substantially higher than the compensation composition and the other of the alloys has a chemical composition having a content of the 3d transition metal element substantially lower than the compensation composition, the two layers having substantially the same magnetic field for the reversal of the magnetic domains and the magnetization per unit volume being at least 10 emu/cm³ in each of the two layers.

The two layers jointly forming a magnetic recording layer, referred to as the first and the second magnetic layers hereinafter, each should have a thickness of at least 1 nm and the total thickness of the two layers should be in the range from 8 nm to 30 nm.

### BRIEF DESCRIPTION OF THE DRAWING

Figure 1 is a graph showing the coercive force of the two-layered magnetic recording layer as a function of the proportion of the thickness of the layer of a gadolinium-iron alloy to the total thickness of the two layers in a magneto-optical recording medium according to the invention.

Figure 2 is a graph showing the Kerr rotation angle of the two-layered magnetic recording layer as a function of the proportion of the thickness of the layer of a gadolinium-iron alloy to the total thickness of the two layers in a magneto-optical recording medium according to the invention.

Figure 3 is a graph schematically showing the magnetization M of the layers of alloys of gadolinium-iron and terbim-iron per unit volume as a function of the content of godolinium or terbium, respectively, in the alloys.

Figure 4 is a graph showing the coercive force of different magnetic recording layers as a function of the temperature.

### DETAILED DESCRIPTION OF THE PREFERRED EMBODIMENTS

As is described above, the most characteristic feature of the improvement of the invention consists in the unique combination of the two alloys to form the first and the second magnetic layers jointly forming the magnetic recording layer of a magneto-optical recording medium. While the first and the second magnetic layers are formed each from an alloy composed of at least one kind of the rare earth elements and at least one kind of the 3d transition metal elements, namely, the content of the 3d transition metal element relative to the rare earth element is substantially higher in one of the two layers and substantially lower in the other of the two layers than the compensation composition determined by the combination of the rare earth element and the 3d transition metal element. Another characteristic feature of the inventive improvement consists in that the two magnetic layers have substantially the same magnetic field for the reversal of the magnetic domains. When the two-layered magnetic recording layer is formed to satisfy the above defined requirements, the magnetic layer has an increased coercive force and Kerr rotation angle so that the magneto-optical recording medium can be imparted with a greatly improved recording sensitivity as well as good bit stability.

Although a magneto-optical recording medium typically has a laminar structure as mentioned above consisting of a transparent substrate plate, a first dielectric layer, a magnetic recording layer, a second dielectric layer and a metallic reflecting layer, the present invention is applicable also to a magneto-optical recording medium in which one or more of the layers other than the substrate plate and the magnetic recording layer are omitted.

The substrate plate is made from a transparent material such as glass and various kinds of plastic resins including polycarbonate resins, polyolefins, poly(methyl methacrylate) resins and the like. The substrate plate usually has a thickness in the range from 1 to 2 mm.

The two magnetic layers jointly forming the two-layered magnetic recording layer for vertical magnetization are formed each from an amorphous alloy composed of at least one kind of the rare earth elements and at least one kind of the 3d transition metal elements as is mentioned above. The rare earth elements here implied include yttrium and the elements having an atomic number of 57 to 71 inclusive and the 3d transition metal elements here implied include iron, cobalt and nickel or, preferably, iron and cobalt. A compensation composition can be defined for the combination of these elements and an alloy of a compensation composition consists of 22 to 23 atomic % of the rare earth element and 78 to 77 atomic % of the 3d transition metal element. The compensation composition is a composition of a ferrimagnetic alloy by which the rare earth element and the 3d transition metal element exhibit substantially the same sub-lattice magnetization so that the effective magnetization is equal to zero.

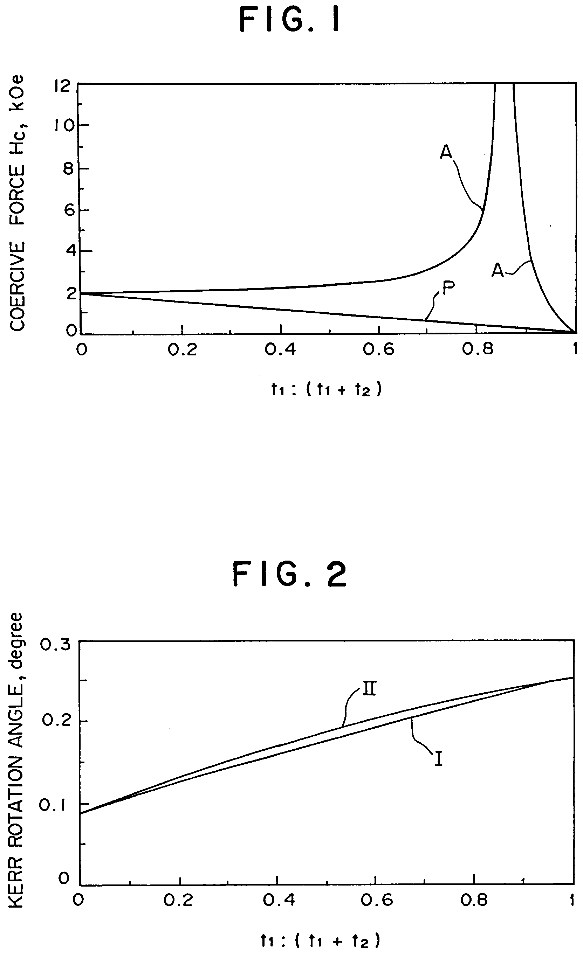

Typical and preferable alloys for the first magnetic layer, which should desirably have a Kerr rotation angle as large as possible, include the alloys of gadolinium and iron, gadolinium, iron and cobalt, terbium, neodymium and iron, terbium, iron and cobalt and the like while typical and preferable alloys for the second magnetic layer, which should desirably have a coercive force as large as possible, include the alloys of terbium and iron, terbium, iron and cobalt, dysprosium and iron, dysprosium, iron and cobalt and the like. The first and the second magnetic layers are replaceable with each other, as is shown by Figure 2, so that the first magnetic layer is formed from an alloy of the latter class while the second magnetic layer is formed from an alloy of the former class.

The magnetic properties of the two-layered magnetic recording layer depend on the thickness relationship of the two layers as well as the overall thickness of the layer. When the oeverall thickness of the layer is relatively large, the coercive force exhibits a step-wise change in the hysteresis loop assuming that the two component layers each have a thickness comparable to that of the other. When the overall thickness is small, the two component layers may have a substantially identical magnetic field for the reversal of the magnetic domains. This is a desirable condition in the two-layered magnetic recording layer according to the invention. In this regard, each of the first and the second magnetic layers should have a thickness of at least 1 nm and the overall thickness of the two-layered magnetic recording layer should be in the range from 8 nm to 30 nm. When these thickness relationships are satisfied, reversal of the magnetic domains proceeds simultaneously in the two magnetic layers and the enhancement effect by the transmitting light can be fully utilized. Difficulties are encountered in uniformly forming a magnetic layer having a too small thickness so that failure sometimes occurs in forming a continuum of the layer leaving some areas on which the layer is not formed by the method of sputtering. When the thickness of the two-layered magnetic layer is very small, the magnetic hysteresis behavior of the layer is substantially the same as a single magnetic layer to transmit the light for signal-reading so that an enhancement effect can be obtained in the dielectric layers and the reflecting layer although the roles for recording and signal-reading cannot be shared between the two layers as in the case with a sufficiently large thickness of the two-layered magnetic recording layer. It would be needless to say that the desired effect of the two-layered magnetic recording layer can hardly be obtained when the thickness of either one of the two layers is too small relative to the other.

Figure 1 shows by the curve A the coercive force of the two-layered magnetic recording layer, of which the first magnetic layer having a thickness of t₁ is formed from an alloy of gadolinium and iron and the second magnetic layer having a thickness of t₂ is formed from an alloy of terbium and iron, each having a composition in the different side of the compensation composition from the other, referred to as the type A hereinbelow, as a function of the ratio of t₁:(t₁ + t₂), in which t₁ + t₂ was constant at 15 nm. Figure 1 also shows by the curve P the coercive force of the two-layered magnetic recording layer consisting of a first layer of an alloy of gadolinium and iron and a second alloy of an alloy of terbium and iron each, however, having a composition in the same side of the compensation composition as the other, referred to as the type P hereinbelow. As is understood from these curves, a greatly increased coercive force of the recording layer can be obtained according to the invention when the two layers have values of thickness to satisfy the proportion in a certain range while the curve P shows that the coercive force of the recording layer monotonously changes not to give a remarkably improved coercive force when the compositions of the two layers are not in accordance with the invention. It is generally understood that the value of the coercive force should desirably be at least 5 to 6 kOe in order that the magneto-optical recording medium may exhibit practically satisfactory performance. Such a value of coercive force can be obtained according to the invention, even when each of the two magnetic layers of, for example, the gadolinium-iron and terbium-iron alloys has a coercive force of 2 kOe or smaller, by suitably selecting the relationship of the thickness between two layers.

It is known that a magnetic layer of an alloy of gadolinium and iron has a relatively large Kerr rotation angle while the layer of a terbium-iron alloy has a relatively small Kerr rotation angle. Figure 2 shows the Kerr rotation angle ϑₖ of the recording layer measured from the substrate plate as a function of the ratio of t₁:(t₁ + t₂), in which t₁ + t₂ was constant at 15 nm. In this case, the Kerr rotation angle monotonously changes as the thickness ratio is changed in each of the type A and type P recording layers. In other words, the Kerr rotation angle of the two-layered recording layer is always smaller than the value of the single layer of a gadolinium-iron alloy. The curve I in Figure 2 is for a two-layered magnetic recording layer of which the first layer is a terbium-iron alloy and the second layer is a gadolinium-iron alloy and the curve II is for a two-layered magnetic recording layer of which the first layer is a gadolinium-iron alloy and the second layer is a terbium-iron alloy. The results are substantially the same indicating replaceability of the first and the second layers.

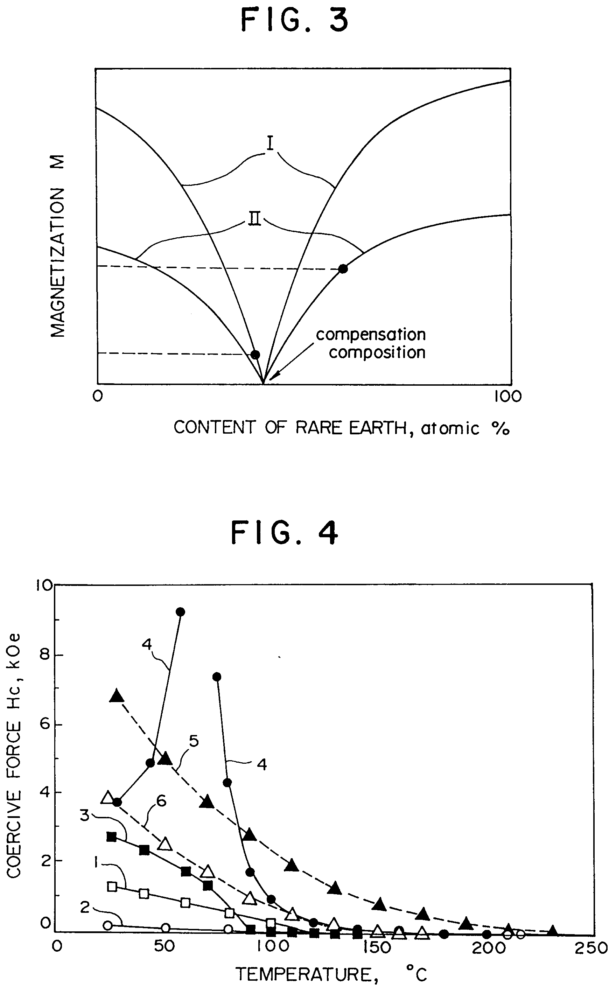

As is understood from Figure 1, the recording layer of the type A according to the invention has a greatly increased coercive force when the layer is designed in such a way that the divergence of the coercive force occurs at a large value of the t₁:(t₁ + t₂) ratio. Since divergence of the coercive force occurs when M₁t₁ = M₂t₂, in which M₁ and M₂ are the magnetization per unit volume in the first layer and the second layer, respectively, and t₁ and t₂ are the thickness of the first layer and the second layer, respectively, the value of t₁:t₂ can be increased by decreasing the value of M₁:M₂. This means that the magnetization of the gadolinium-iron alloy should be smaller than the terbium-iron alloy in order that divergence of the coercive force of the layer may occur at a thickness ratio t₁:(t₁ + t₂) approximately equal to 1. As is understood from Figure 3 schematically giving the magnetization per unit volume as a function of the content of a rare earth element in rare earth-iron alloys, gadolinium-iron alloys shown by the curve I have a magnetization always larger than terbium-iron alloys shown by the curve II assuming that the contents of the rare earth element in atomic % are identical in the alloys while the magnetization approaches zero at the compensation composition. Accordingly, M₁ can be smaller than M₂ when the composition of the first layer of the gadolinium-iron alloy is taken to be close to the compensation composition and the composition of the second layer of the terbium-iron alloy is taken to be apart from the compensation composition.

Figure 4 shows the coercive force of several different types of the recording layer having a thickness of 30 nm formed from gadolinium or terbiun in combination with iron or iron and cobalt as a function of temperature. The curves 1 to 6 in Figure 4 are characterized as follows.
- Curve 1: : an alloy of 25 atomic % terbium and 75 atomic % iron
- Curve 2: : an alloy of 21 atomic % gadolinium and 7 9 atomic % iron
- Curve 3: : combibation of a 15 nm thick layer of an alloy of 25 atomic % terbium and 75 atomic % iron and a 15 nm thick layer of an alloy of 21 atomic % gadolinium and 79 atomic % iron
- Curve 4: : combibation of a 6 nm thick layer of an alloy of 25 atomic % terbium and 75 atomic % iron and a 24 nm thick layer of an alloy of 21 atomic % gadolinium and 79 atomic % iron
- Curve 5: : an alloy of 20 atomic % terbium, 50 atomic % iron and 30 atomic % cobalt
- Curve 6: : an alloy of 20 atomic % terbium, 70 atomic % iron and 10 atomic % cobalt
Since signal-recording in a magneto-optical recording medium is undertaken in a magnetic bias field of around 200 Oe applied to the medium, an important parameter in making comparison of the recording sensitivity is the temperature at which the coercive force has a value of 200 Oe. As is understood from Figure 4, the temperature to satisfy this requirement is lower than that of the terbium-iron-cobalt alloy, which is a magnetic material most widely used in conventional magneto-optical recording media, so that the recording sensitivity of the recording medium according to the invention can be much higher than conventional magneto-optical recording media.

In the following, the present invention is illustrated in more detail by way of examples and comparative examples.

### Example 1.

A magneto-optical recording medium was prepared by successively forming, by the method of sputtering on a substrate disc of a polycarbonate resin having a diameter of 130 mm and a thickness of 1.2 mm and provided with a tracking groove, a layer of silicon nitride having a thickness of 30 nm as the first dielectric layer, a two-layered magnetic recording layer consisting of a first magnetic layer of a gadolinium-iron alloy having a thickness of 7.5 nm of which the content of gadolinium was 21 atomic % to be leaner than the compensation composition and a second magnetic layer of a terbium-iron alloy having a thickness of 7.5 nm of which the content of terbium was 25 atomic % to be richer than the compensation composition, a layer of silicon nitride having a thickness of 28 nm as the second dielectric layer and a layer of aluminum having a thickness of 40 nm as the reflecting layer.

The magnetization of the first and the second magnetic layers in the above prepared magneto-optical recording medium per unit volume as measured by the VSM was 30 emu/cm³ and 204 emu/cm³, respectively. Further, the magneto-optical recording medium was subjected to the measurements of the Kerr rotation angle and the coercive force from the substrate side as well as the temperature at which the coercive force could be decreased to 200 Oe to give the results shown in Table 1 below.

### Example 2.

The experimental procedure was substantially the same as in Example 1 except that the first and the second magnetic layers had a thickness of 13 nm and 2 nm, respectively. The results of the evaluation tests of the thus prepared magneto-optical recording medium were as shown in Table 1 for the same items as in Example 1.

### Comparative Example 1.

A magneto-optical recording medium was prepared in substantially the same manner as in Example 1 except that the first magnetic layer had a thickness of 13 nm and formed from a gadolinium-iron alloy of which the content of gadolinium was 21, atomic % to be leaner than the compensation composition and the second magnetic layer had a thickness of 2 nm and formed from a terbium-iron alloy of which the content of terbium was 17 atomic % also to be leaner than the compensation composition. The magnetization of the first and the second magnetic layers in the above prepared magneto-optical recording medium per unit volume was 220 emu/cm³ and 23 emu/cm³, respectively. The results of the evaluation tests of the thus prepared magneto-optical recording medium were as shown in Table 1 for the same items as in Example 1.

### Comparative Example 2.

A magneto-optical recording medium was prepared in a similar manner to Example 1. The magnetic recording layer here, however, was not two-layered but a single layer of a terbium-cobalt-iron alloy containing 22 atomic % of terbium and 8 atomic % of cobalt and having a thickness of 15 nm. The results of the evaluation tests of the thus prepared magneto-optical recording medium were as shown in Table 1 for the same items as in Example 1.

**Table 1**

| | Example 1 | Example 2 | Comparative Example 1 | Comparative Example 2 |
|---|---|---|---|---|
| Kerr rotation angle, degree | 0.92 | 1.05 | 1.01 | 0.90 |
| Coercive force, Hc, kOe | 3.80 | 7.30 | 0.06 | 5.30 |
| Temperature, °C, for Hc = 200 Oe | 80 | 115 | 118 | 135 |

## Claims

1. In a magneto-optical recording medium having a laminar structure consisting of a transparent substrate plate and a plurality of layers successively formed on the substrate plate including a first dielectric layer, a magnetic recording layer having a two-layered structure, a second dielectric layer and a metallic reflecting layer, the improvement which comprises having the magnetic recording layer consisting of two layers of different alloys each composed of at least one kind of rare earth elements and at least one kind of 3d transition metal elements, of which one of the alloys has a chemical composition having a content of the 3d transition element substantially higher than the compensation composition and the other of the alloys has a chemical composition having a content of the 3d transition metal element substantially lower than the compensation composition, the two layers having substantially the same magnetic field for the reversal of the magnetic domains and the magnetization per unit volume being at least 10 emu/cm³ in each of the two layers.

2. The improvement as claimed in claim 1 in which the two layers jointly forming the magnetic recording layer each have a thickness of at least 1 nm and the total thickness of the two layers is in the range from 8 nm to 30 nm.

3. The improvement as claimed in claim 1 in which one of the two layers jointly forming the magnetic recording layer having a larger value of the Kerr rotation angle than the other has a value of magnetization per unit volume smaller by at least 20 emu/cm³ than the other of the two layers.

4. The improvement as claimed in claim 2 in which one of the two layers jointly forming the magnetic recording layer having a larger value of Kerr rotation angle than the other has a thickness larger by at least 1 nm than the other.

5. The improvement as claimed in claim 1 in which one of the two layers jointly forming the magnetic recording layer is formed from an alloy selected from the group consist-ing of the alloys of gadolinium and iron, gadolinium, iron and cobalt, terbium, neodymium and cobalt and terbium, iron and cobalt and the other of the two layers is formed from an alloy selected from the group consisting of the alloys of terbium and iron, terbium, iron and cobalt, dysprosium and iron and dysprosium, iron and cobalt.
